Europäisches Patentamt

European Patent Office

Office européen des brevets

(19)

(11) Publication number: **0 108 029**

A2

(12) # EUROPEAN PATENT APPLICATION

(21) Application number: **83630111.9**

(22) Date of filing: **04.07.83**

(51) Int. Cl.³: **E 21 B 10/20**
**E 21 B 10/22, F 16 B 21/18**

(30) Priority: **29.09.82 US 426436**

(43) Date of publication of application:
**09.05.84 Bulletin 84/19**

(84) Designated Contracting States:
**DE FR GB**

(71) Applicant: **HUGHES TOOL COMPANY**
**5425 Polk Avenue**
**Houston Texas 77023(US)**

(72) Inventor: **Shepherd, William L.**
**5300 Memorial M-3**
**Houston Texas 77007(US)**

(72) Inventor: **McElya, Fred H.**
**2603 Yost Road**
**Pearland Texas 77581(US)**

(74) Representative: **Waxweiler, Jean et al,**
**OFFICE DENNEMEYER S.à.r.l. 21-25 Allée Scheffer**
**P.O.Box 41**
**L-2010 Luxembourg(LU)**

(54) Rock bit cutter with truncated retainer ring.

(57) An improved cutter retainer ring for a rock bit, the ring having a curved exterior portion and a truncated interior surface to minimize the stress during assembly.

Fig.2

EP 0 108 029 A2

ROCK BIT CUTTER WITH TRUNCATED RETAINER RING

The present invention relates generally to earth boring drill bits and in particular to those that have rotatable cutters secured to bearing shafts by means of resilient retainer rings.

Rotary drilling for oil, gas and other minerals is accomplished primarily with drill bits having rotatable cutters. The first commercially successful such bit was invented by H.R. Hughes, U.S. Patent No. 930 759, after the initial successful drilling of the hard cap rock at the Spindletop Field near Beaumont, Texas, in the first decade of this century.

Since the development of that first rock bit with rotatable cones, there have been many improvement which have increased impressively the penetration rate and total footage. Some of these improvements have delt with improvements to retain the rotatable cones to their bearing shafts. Successful, recent improvements are disclosed in the patents to Edward M. Galle, U.S. Patent 4 236 764, December 2, 1980 and Leroy W. Ledgerwood, III, U.S. Patent No. 4 344 658 , August 17, 1982. These patents disclose a resilient snap ring which is confined in a retainer groove even when the cutter is thrust inward on the bearing shaft, as sometimes happens during drilling. This confinement of the snap ring in the retainer groove prevents retraction of the ring into the assembly groove and thus prevents separation of the cutter from the bearing shaft. Otherwise, a cutter could be lost in the hole and might result in an expensive cessation of drilling to change bits (and at worst to fish for the lost cone).

In some of the rock bits that utilize E.M. Galle's and Leroy W. Ledgerwood's inventions, however, the snap rings appear to have been stressed beyond the yield point of the metal. This could permit an accidential separation of a cutter from its bearing shaft.

This invention relates to an improved resilient ring retainer for rotatably securing a cutter to the bearing shaft of a rock bit. The retainer ring preferably has a cross sectional configuration that includes a circular exterior portion and an interior truncated, cylindrical surface. The ring must be stressed during assembly when forced into the assembly groove as the cutter is assembled over the shaft. The stress in the ring is minimized because the ring geometry described above has a smaller mean diameter in the unstressed or free state for a given groove configuration than the prior art ring. The smaller mean diameter results in less total ring deflection and less stress during assembly.

The above as well as additional objects, features, and advantages of the invention will become apparent in the following detailed description, wherein:

Fig. 1 is a portion of a rock bit shown in longitudinal section to expose a portion of the lubrication system, but more importantly, to show the resilient snap ring used to retain the rotatable cutter on its associated bearing shaft.

Fig. 2 is a fragmentary cross sectional view of a portion of the cutter and bearing shaft shown in Fig. 1, with the resilient ring shown in its assembled position. Phantom lines show the ring in its relaxed position in one case, and in another case, when it is forced into the assembly groove as the cone is being assembled over the bearing shaft.

Fig. 3 is a perspective view of the resilient ring in its free state or condition to show its circular exterior portion and interior truncated surface.

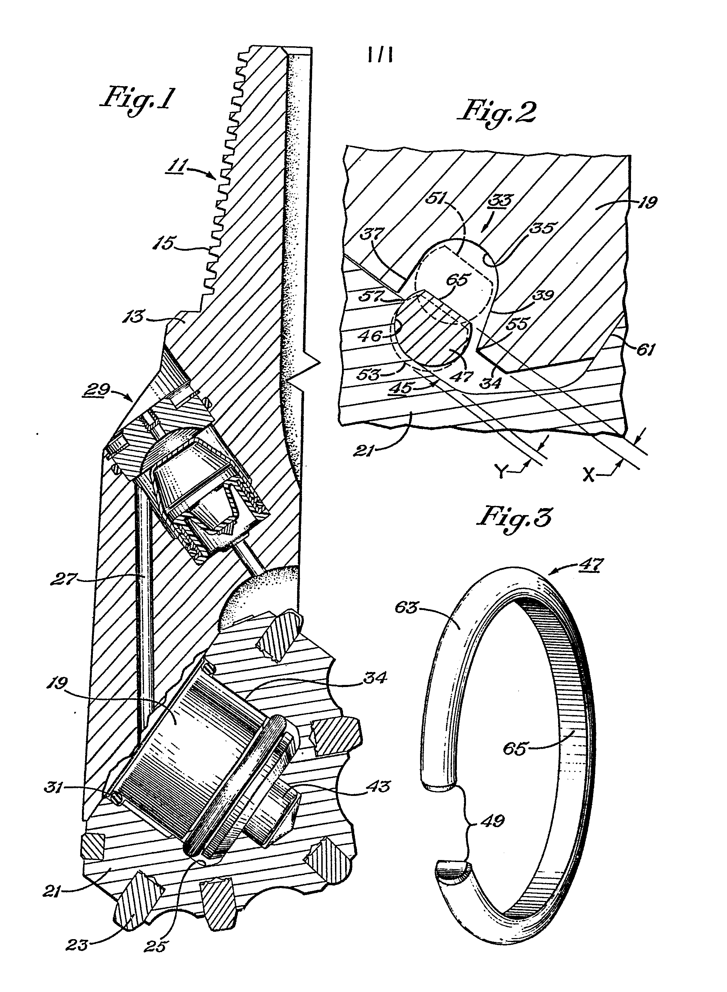

A portion of an earth boring drill bit 11 is shown in Fig. 2 including one section of a body 13, which is typically joined with two other such sections by a welding process. Threads 15 are formed on the top of the bit 11 for connection to a conventional drill string (not shown) for rotating as well as raising or lowering the drill bit during drilling operations. Each head section 13 has a cantilevered shaft or bearing pin 19 having its unsupported end oriented inwardly and downwardly. A generally conically shaped cutter 21 is rotatably mounted on each bearing pin 19. Cutter 21 has earth disintegrating teeth 23 on its exterior and a central opening or bearing recess 25 in its interior for mounting upon the bearing pin 19. Friction bearing means formed on the bearing pin 19 and within the cutter bearing recess 25 are connected with lubricant passages 27 (see U.S. Patent No. 4 012 238 for effective bearing surface treatments).

A pressure compensator 29 and associated passages constitute a lubricant reservoir that limits the pressure differential across a seal 31 which separates the lubricant and the ambient drilling fluid which surrounds the bit. U.S. Patent No. 4055 225 of Stewart C. Millsapps, Jr., discloses an effective pressure compensator system for an earth boring bit.

An O-ring seal 31 is located between each bearing pin 19 and cutter 21 at the base of the bearing pin to prevent egress of lubricant and ingress of drilling fluid and contaminates. (See U.S. Patent No. 3 397 928 for an O-ring seal disclosure and U.S. Patent No. 3 935 114 for disclosure of a satisfactory lubricant.)

As shown in Fig. 2, an annular assembly groove 33 is formed within the cylindrical surface 34 of the bearing pin 19. Groove 33 has in this instance a circular bottom portion 35, and an outer sidewall 37 and an inner sidewall 39. Outer sidewall 37 is a planer surface and preferably perpendicular to the coaxis (not shown) of the bearing pin 19 and cutter 21.

Inner sidewall 39 is a conical thrust surface or inclined wall which is non-perpendicular to the axis of the bearing pin, oriented at an angle, as seen in Fig. 2, of preferably 15 degrees with respect to a plane perpendicular to the axis of the bearing pin. This produces an entrance to groove 33 larger than the diameter of its circular bottom portion 35 and is a beneficial thrust surface, as explained in U.S. Patent Nos. 4 236 764 and 4 344658.

A registering retainer groove 45 is formed in the bearing recess 25 of cutter 21. Groove 45 has an outer sidewall 46, located farthest from the nose 43 of the bearing pin 19.

Assembly groove 33 and retainer groove 45 are located such that they register to define an irregularly shaped annular cavity with curved bottoms. A snap ring 47 is located within this cavity and formed of a resilient material, preferably piano wire, and contains a gap 49 (see Fig.3) so that its annular diameter may be compressed or expanded.

As shown in Fig.2, the ring must be compressed to assume the position shown by the phantom lines 51 when the cone 21 is initially assembled over the ring. In the relaxed position of the ring as shown by the phantom lines 53, the ring 47 is larger in diameter than the retainer groove 45 so that it becomes tightly confined within the groove after assembly.

The geometry of the grooves and snap ring are patterned after those disclosed in U.S. Patent No. 4 236 764 such that any inward movement of cutter 21

- 5 -

on bearing shaft 19 confines the ring 47 between the annular edge 55 of groove 33 and the annular edge 57 of groove 45. This prevents retraction of the ring to the position shown in phantom 51 and separation of the cutter from the bearing pin. Further, when the cone 21 runs outward on the bearing pin 19, the most normal condition during drilling, there is clearance between the ring 47 and the assembly groove 33, and all outward thrust is assumed by the thrust surfaces 61 of the bit.

With reference to Fig. 3 the ring 47 has a cross-sectional configuration such that it includes a curved, here circular, exterior portion 63 and a truncated interior portion or surface 65 which is cylindrical. The purpose of this configuration is to minimize stresses during the assembly of the ring within the registering grooves 33, 45 to a value less than the yield strength of the piano wire used to form the ring. A preferred wire has a tensile strength in the range of $15.85 \times 10^9$ to $20.13 \times 10^9$ Pa and a yield strength in the range of $13.44 \times 10^9$ to $17.11 \times 10^9$ Pa.

Prior to assembly, the snap ring in its free state has an outer diameter, represented by the phantom line 53, that is preferably 0,114cm larger than the diameter of the retainer groove 45. This dimension is reprinted by the distance Y in Figure 2. Thus, the snap ring will expand against the retainer groove after assembly with a force sufficient to assure good retention.

During assembly of the cutter 21 over the cylindrical bearing surface 34 of bearing shaft 19, the snap ring 47 is forced by the cylindrical bearing surface of the cutter 21 to assume the contracted position in the assembly groove 33 of the bearing shaft 19, as indicated by the phantom line 51. In the posi-

- 6 -

tion the snap ring 47 is subjected to large stresses that should not exceed its yield strength. Otherwise, the snap ring 47 will yield, become permanently deformed and fail to snap properly into the retainer groove 45 at the conclusion of assembly.

As represented by the letter X in Figure 2, the truncated surface 65 extends past cylindrical surface 34 and into the assembly groove 33 by a distance of 0.203 cm on the diameter. This is less than would result by using a snap ring 47 of completely circular diameter and reduces the stress in the snap ring during assembly to a value less than the yield stress. The above dimensions for X and Y are for a snap ring 47 having an outside diameter of 6.0cm and a thickness of 0.385cm.

While the invention has been shown in only one of its forms, it should be apparent it is not thus limited, but is susceptible to various changes and modification.

CLAIMS

1.    An earth boring drill bit of the type having at least one rotatable cutter secured by a retainer ring to a bearing shaft, characterized by

an assembly groove formed in a selected one of the cutter and shaft;

a registering retainer groove formed in the other of said cutter and shaft;

the retainer ring having a cross sectional configuration that includes a curved portion and truncated portion;

whereby the stress during assembly of the ring remains safely below the yield point.

2.    The earth boring drill bit as in claim 1, characterized in that the assembly groove is in the shaft, the retainer groove is in the cutter, the curved portion of the ring is the exterior surface, and the truncated portion is the interior surface.

3.    The earth boring drill bit as in claim 1 or 2, characterized in that

the assembly groove is formed to a depth at least as great as the radial thickness of the ring; and that

the registering retainer groove is formed to a depth less than the radial cross sectional thickness of the ring.

0108029

1/1

Fig.1

*11*

*15*

*13*

*29*

*27*

*19*

*31*

*21*

*23*    *25*

Fig.2

*51*    *33*

*37*    *35*

*65*

*57*    *39*

*55*

*46*    *61*

*53*    *47*  *34*

*45*

*21*    *19*

Y    X

Fig.3

*47*

*63*

*65*

*49*